# EUROPEAN PATENT SPECIFICATION

(11) **EP 2 473 539 B1**
(45) Date of publication and mention of the grant of the patent: **06.11.2013**
(21) Application number: 10752670.9
(22) Date of filing: 30.08.2010
(51) Int. Cl.: C02F 5/10, C08F 290/06, C08F 220/06, C08F 222/06, C08F 220/20

(54) **METHOD FOR INHIBITING THE DEPOSITION OF SILICA AND/OR SILICATE COMPOUNDS IN AQUEOUS SYSTEMS**
VERFAHREN ZUR HEMMUNG DER ABLAGERUNG VON SILICA- UND/ODER SILICAT-VERBINDUNGEN IN WÄSSRIGEN SYSTEMEN
PROCÉDÉ POUR INHIBER LE DÉPÔT DE COMPOSÉS SILICES ET/OU SILICATES DANS DES SYSTÈMES AQUEUX

(30) Priority: 02.09.2009 US 552991
(43) Date of publication of application: 11.07.2012
(73) Proprietor: BASF SE, 67056 Ludwigshafen (DE)
(72) Inventor: HIRSCH, Keith A., Canton MI 48187 (US)
(74) Representative: Fiesser, Gerold Michael
(86) International application number: PCT/US2010/047147
(87) International publication number: WO 2011/028662

(56) References cited:
- EP-A1- 2 020 422

## Description

### BACKGROUND OF THE INVENTION

### 1. Field of the Invention

The subject invention generally relates to a method of inhibiting the deposition of silica and/or silicate compounds on a surface in an aqueous system. More specifically, the subject invention relates to a method of inhibiting the deposition of silica and/or silicate compounds on a surface in an aqueous system by adding a polymer to the aqueous system.

### 2. Description of the Related Art

Formation, precipitation and deposition of scale is problematic in an aqueous system such as a steam generating system, a cooling water system, a membrane separation system, and the like. A number of approaches have been developed in an effort to prevent the deposition of scale in the aqueous system.

The formation of scale in the aqueous system originates from several causes. Typically, sulfates, silica, silicates, high concentrations of phosphate, as well as carbonates of calcium and magnesium, either occurring naturally or added to the water in the aqueous system for other purposes, react to form the scale. The scale comprises calcium, magnesium, silica and/or silicate compounds, and other compounds.

One particular type of scale, silica scale, comprises the silica and/or silicate compounds. Silica and/or silicates are naturally present in water. When the water is cycled in the aqueous system, a concentration of silica and/or silicates increases to the point at which the precipitation of silica scale from the water of the aqueous system occurs. Sometimes the precipitation of silica scale proceeds by a polymerization of the silica itself, resulting in a silica gel (i.e. a silicate compound). Typically, for the precipitation of silica scale to occur, the concentration of silica and/or silicate must be greater than 200 ppm. However, changes in a pH of the water affect the precipitation of silica scale. Specifically, the precipitation of silica scale is most favorable at a pH of 8.0 to 8.5. Moreover, when cations are present in the aqueous system, the precipitation of silica scale can occur when the concentration of silica and/or silicates is less than 200 ppm. Furthermore, cations can promote the precipitation of silica scale from an aqueous system having a pH greater than 8.0. Cations that promote the precipitation of silica scale include, but are not limited to, Al²⁺, Mg²⁺, Zn²⁺, and Fe³⁺.

The formation and the precipitation of silica scale is followed by the deposition of silica scale on a surface of an internal component, such as a pipe, a membrane, a packing material, and a like component of the aqueous system. Typically, the deposition of silica scale occurs on the surface of the internal component resulting in a hard incrustation of silica scale. The deposition of silica scale on the internal component restricts circulation of the water of the aqueous system. In some cases, the aqueous system requires heating and/or cooling of the water for various purposes. In other cases, deposition of the silica scale on the internal component impedes heat transfer functions of the aqueous system. In yet other cases, the deposition of silica scale on the internal component results in inadequate water quality. As such, the deposition of silica scale reduces operational efficiency of the aqueous system.

Once the silica scale is deposited on the internal component of the aqueous system, the way to remove the silica scale is with an acid wash. In many cases, the deposition of silica scale necessitates replacement of the internal component of the aqueous system.

One approach to preventing the deposition of silica scale in the aqueous system makes use of an external treatment of the water. Typically, the external treatment includes methods such as coagulation, filtration, and softening of the water prior to use in the aqueous system. Use of the external treatment is only moderately effective in preventing the formation, the precipitation, and the deposition of silica scale in the aqueous system. In all cases, the external treatment does not prevent the formation, the precipitation, and the deposition of silica scale since muds, sludge, and hardness-imparting ions escape the external treatment and are introduced into the aqueous system.

Another approach to preventing the deposition of silica scale in the aqueous system makes use of an internal treatment of the water. Typically, the internal treatment includes adding a silica scale inhibitor to the water of the aqueous system. The addition of the silica scale inhibitor keeps the silica and/or silicates dissolved in the water of the aqueous system.

Various monomers, oligomers, and polymers have been added to aqueous systems as the silica scale inhibitor. Polymeric silica scale inhibitors, such as polymers comprising the reaction product of ethylene oxide and propylene oxide, have been added to aqueous systems. Other known polymeric silica scale inhibitors include polymers having a polyether backbone with regularly or randomly spaced hydrophobic groups disposed along the polyether backbone and polymers having polycarboxylate backbones with allyl ether or ester linked polyether side chains. However, allyl ether or ester linkages may not be suitable under certain conditions in which the water of the aqueous system has a basic pH of greater than 8.0, due to the higher incidence of precipitation of silica scale, as described above, and further due to instability of the polymers at the basic pHs.

In view of the foregoing, there remains an opportunity to provide silica scale inhibitors that are different from known silica scale inhibitors and that alleviate some of the problems associated with known polymeric silica scale inhibitors.

### SUMMARY OF THE INVENTION AND ADVANTAGES

The instant invention provides a method of inhibiting the deposition of silica and/or silicate compounds on a surface in an aqueous system. The method includes the step of adding a polymer to the aqueous system. The polymer comprises at least one constitutional unit (i) and at least one additional constitutional unit (ii). The constitutional unit (i) is represented by the formula: 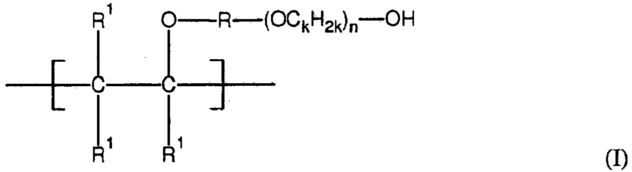 wherein R is an alkyl group having at least 2 carbon atoms; R¹ is selected from the group of a hydrogen atom, an alkyl group, an aryl group, an ester, an amide, and an imide; k is 2 to 4; and n is at least about 10. The additional constitutional unit (ii) contains at least one group selected from the group of carbonyl groups, sulfonate groups, and phosphate groups.

The polymer exhibits excellent stability and silica scale inhibition thereby improving upon the performance of existing silica scale inhibitors.

### BRIEF DESCRIPTION OF THE DRAWING

Other advantages of the present invention will be readily appreciated, as the same becomes better understood by reference to the following detailed description when considered in connection with the accompanying drawing.

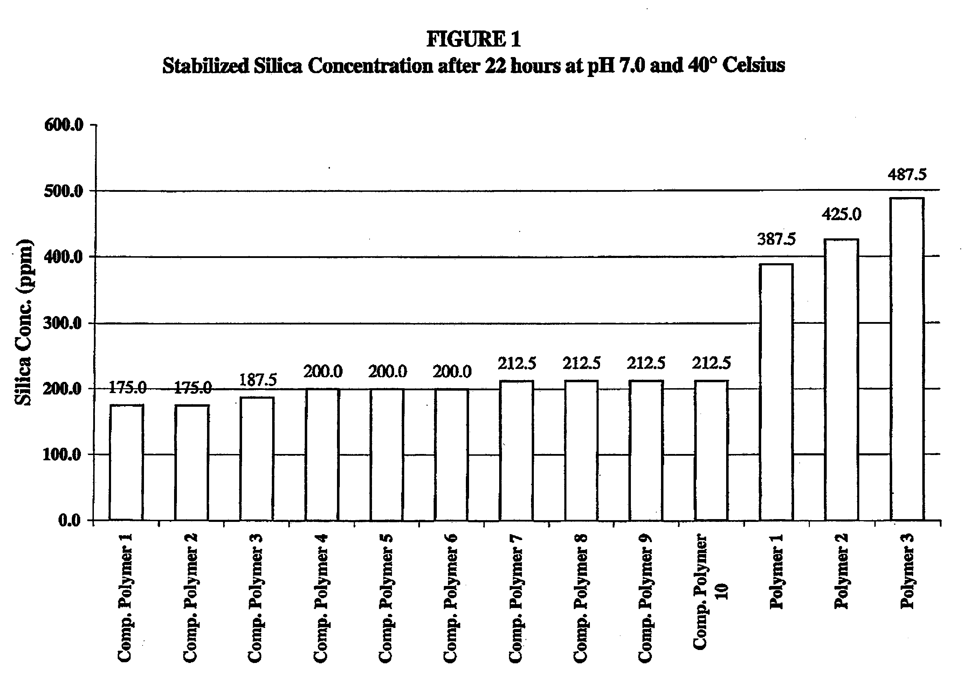

Figure 1 is a bar graph illustrating stabilized silica concentration after 22 hours at pH 7.0 and 40° Celsius of Polymers 1-3 and Comparative (Comp.) Polymers 1-10.

### DETAILED DESCRIPTION OF THE INVENTION

A method of inhibiting the deposition of silica and/or silicate compounds on a surface in an aqueous system is provided. Formation and precipitation of the silica and/or silicate compounds results in deposition of the silica and/or silicate compounds on the surfaces as an incrustation of silica scale. Deposition of silica and/or silicate compounds on the surface in the aqueous system generally reduces operational efficiency of the aqueous system. The method provided herein inhibits the formation, precipitation, and deposition of silica and/or silicate compounds on surfaces in aqueous systems even under conditions that promote deposition of the silica and/or silicate compounds.

The aqueous system typically comprises an aqueous component that is in contact with the surface in the aqueous system. The aqueous component may be any kind of solution of water such as, but not limited to, fresh water, salt water, tap water, waste water, and/or reclaimed water. Typically, the aqueous component comprises water in an amount of at least about 90 to about 99.5 percent by weight based on 100 parts by weight of the aqueous component. More typically, the aqueous component comprises water in an amount of at least about 95 percent by weight based on 100 parts by weight of the aqueous component.

The aqueous component includes, in addition to water, silica and/or silicates dissolved therein. Examples of silicates include, but are not limited to, sodium silicate, colloidal silica, and magnesium silicate. Silica and/or silicates are commonly found in many different sources of water. The silica and/or silicate compounds that are deposited on the surface in the aqueous system can be the same as the silica and/or silicates or, alternatively, the silica and/or silicate compounds may be the reaction product of the silica and/or silicates and other impurities as described in greater detail below. While it would be desirable for the silica and/or silicates to be absent from the aqueous component so as to prevent deposition of silica and/or silicate compounds on the surface in the aqueous system, this is not always possible. The method of the instant invention at least partially negates the effects due to the presence of the silica and/or silicates in the aqueous component of the aqueous system in terms of inhibiting deposition of silica and/or silicate compounds on the surfaces in the aqueous system.

Deposition of silica and/or silicate compounds is further promoted where the aqueous component has a basic pH and/or contains impurities such as silt, clay, organic wastes, soluble silica, soluble silicate, polymerized silica, polymerized silicate, and cations including, but not limited to, Al²⁺, Mg²⁺, Zn²⁺, and Fe³⁺. The aqueous component may have a basic pH of greater than about 7.0, and, alternatively, greater than about 8.0.

The surface on which deposition of silica and/or silicate compounds is inhibited is further defined as any surface that is in contact with the aqueous component. For example, the aqueous system may include any apparatus having the surface in contact with the aqueous component of the aqueous system. The apparatus may be any device including, but not limited to, cooling water apparatuses, boiler water apparatuses, steam generating apparatuses, desalinization apparatuses, gas scrubber apparatuses, evaporator apparatuses, paper manufacturing apparatuses, mining apparatuses, and separation or filtration apparatuses having a membrane such as reverse osmosis apparatuses, ultrafiltration apparatuses, and nanofiltration apparatuses. The surface may be any component of the apparatus on which the silica and/or silicate compounds may deposit and may include, but is not limited to, pipes, collection devices, agitating devices, filters, membranes, and packing materials. The surface may include any kind of material such as, but not limited to, iron, steel, copper, ceramic, plastic, glass, and materials conventionally used to form membranes.

The method comprises the step of adding a polymer to the aqueous system. In one embodiment, the step of adding the polymer may be further defined as directly adding the polymer to the aqueous component that includes the silica and/or silicates dissolved therein. In another embodiment, the step of adding the polymer may be further defined as adding the polymer to a fluidic carrier to form a solution and then adding the solution to the aqueous component. For example, the polymer may be provided as a gel, tablet, powder, or concentrate. The gel, tablet, or powder can be added directly to the aqueous component or can be added to the fluidic carrier, which may then be added directly to the aqueous component. In one embodiment, the polymer comprises:
(i) at least one constitutional unit represented by the formula: 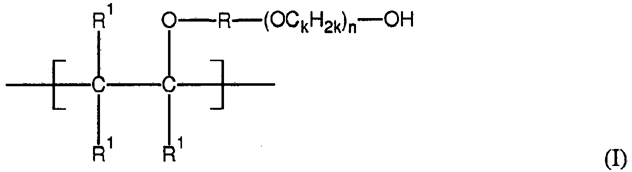 wherein R is an alkyl group having at least 2 carbon atoms; R¹ is selected from the group of a hydrogen atom, an alkyl group, an aryl group, an ester, an amide, and an imide; k is 2 to 4; and n is at least about 10; and
(ii) at least one additional constitutional unit containing at least one group selected from the group of carbonyl groups, sulfonate groups, and phosphate groups. In another embodiment, the polymer comprises the reaction product of:
   (i) an alkoxylated vinyl ether having at least 10 alkyleneoxy groups present in a polyether chain thereof; and
   (ii) an unsaturated compound containing at least one group selected from the group of carbonyl groups, sulfonate groups, and phosphate groups.

The polymer inhibits deposition of silica and/or silicate compounds on the surface in the aqueous system. Without being bound to any particular theory, it is believed that the polymer binds silica and/or silicates within the aqueous component and remains in solution, thereby preventing the deposition of silica and/or silicate compounds.

Typically, the polymer comprising constitutional units (i) and (ii) is produced by free radical polymerization of at least two different precursors that correspond to constitutional units (i) and (ii), respectively, each having a vinyl group. In other words, the precursors of the constitutional units (i) and (ii), prior to polymerization, each have a vinyl group. The polymer comprising the constitutional units (i) and (ii) may be referred to as a "comb" polymer due to the structure thereof, which comprises a backbone resulting from free radical polymerization of the vinyl groups of the precursors, and further comprises pendant groups extending from the backbone such as the portion of formula (I) represented by: 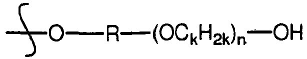 (herein after referred to as the "polyether chain") from the at least one constitutional unit (i) and at least the carbonyl, sulfonate, or phosphate group(s) from the at least one additional constitutional unit (ii).

The precursor of the at least one constitutional unit (i) is generally referred to as an alkoxylated vinyl ether and can be prepared through methods known in the art such as, but not limited to, alkoxylating an alkoxy vinyl ether with an alkylene oxide having the formula OCₖH₂ₖ where k is the same as defined above. For example, the alkylene oxide may be selected from the group of ethylene oxide, propylene oxide, butylene oxide, and combinations thereof. It is to be appreciated that any combination of ethylene oxide, propylene oxide, or butylene oxide may be used during alkoxylation of the alkoxy vinyl ether. It is to be appreciated that under some circumstances, the polymer can comprise more than one constitutional unit (i) represented by the general formula (I). In one embodiment, the at least one constitutional unit (i) is further defined as at least two different constitutional units each having the formula (I) with the precursors to the at least two different constitutional units (i-1) and (i-2) are prepared differently from one another. For example, the precursor to at least one of the constitutional units (i-1) may be prepared by alkoxylating an alkoxy vinyl ether with ethylene oxide and the precursor to at least one of the other constitutional units (i-2) may be prepared by alkoxylating an alkoxy vinyl ether with propylene oxide and/or butylene oxide. The precursor of the at least one constitutional unit (i) is used to incorporate the polyether chain into the polymer. Without being bound to any particular theory, it is believed that the ether linkage that is disposed immediately adjacent to the vinyl group provides excellent stability, as compared to esters, allyl ethers, or other ethers that do not include an ether linkage disposed immediately adjacent a vinyl group, such that the resulting polymer inhibits deposition of silica and/or silicate compounds even when the aqueous component has a basic pH.

In formula (I) for the at least one constitutional unit (i), the value of n determines the length of the polyether chain and substantially controls a number average molecular weight of the at least one constitutional unit (i). The number average molecular weight of the at least one constitutional unit (i) substantially controls a number average molecular weight of the polymer. Without being bound to any particular theory, it is believed that the polyether chain enables the polymer to wrap around molecules and/or small particles of silica and/or silicates that are dissolved in the aqueous component and that would otherwise be prone to precipitation, with the polymer thereby inhibiting precipitation and deposition of the silica and/or silicate compounds. For purposes of the instant application, the value of n is at least 10 as set forth above. Alternatively, n is from about 20 to about 150, alternatively from about 60 to about 135. It is to be appreciated that under some circumstances, the polymer can comprise more than one constitutional unit (i) represented by the general formula (I). In one embodiment, the at least one constitutional unit (i) is further defined as at least two different constitutional units each having the formula (I) wherein n is from about 20 to 60 in at least one of the constitutional units (i-1) represented by formula (I) and wherein n is greater than 60 in at least one of the other constitutional units (i-2) represented by formula (I). Alternatively, n is from about 20 to 60 in at least one of the constitutional units (i-1) represented by formula (I) and n is greater than 125 in at least one of the other constitutional units (i-2) represented by formula (I).

For the polymer comprising the at least two different constitutional units (i-1) and (i-2) and the at least one additional constitutional unit (ii), the constitutional units (i-1) and (i-2) are typically present in a molar ratio of from about 1:5 to about 5:1 to each other. As shown in the Examples below, polymers having the at least two different constitutional units (i-1) and (i-2), present in the above range of molar ratios, have maximized effectiveness in some circumstances.

As set forth above, R in formula (I) is an alkyl group having at least 2 carbon atoms, and typically has from 2 to 10 carbon atoms. R¹ in formula (I) is selected from the group of a hydrogen atom, an alkyl group, an aryl group, an ester, an amide, and an imide. In one embodiment, at least one of the R¹ groups in formula (I) is the ester, amide, or imide. The ester, amide, and/or imide may be alkoxylated with an alkylene oxide having the formula OCₖH₂ₖ where k is the same as defined above. For example, the alkylene oxide may be selected from the group of ethylene oxide, propylene oxide, butylene oxide, and combinations thereof. As such, when the ester, amide, and/or imide is present in constitutional unit (i) and is alkoxylated, such group(s) is/are present in addition to the polyether chain described above. Specific examples of suitable precursors of the at least one constitutional unit (i) include polyethylene glycol monovinyl ethers having a molecular weight of from about 1,000 to about 10,000 g/mol, alternatively from about 1,000 to about 6,000 g/mol, which molecular weights are substantially controlled by the by the value of n in formula (I).

For the polymer comprising the at least one constitutional unit (i) and the at least one additional constitutional unit (ii), the at least one constitutional unit (i) is typically present in a molar percent of from about 15 to about 50, more typically from about 25 to about 40, based upon the total amount of all constitutional units of the polymer.

The carbonyl group may be further defined as an unsaturated monocarboxylic acid derivative such as any of those recited in U.S. Patent No. 7,482,405, with the portion of which recites unsaturated monocarboxylic acid derivatives hereby incorporated by reference. Additional examples of suitable carbonyl groups include diesters of unsaturated dicarboxylic acids such as any of those recited in U.S. Patent No. 7,482,405, with the portion of which recites diesters of unsaturated dicarboxylic acids hereby incorporated by reference. The precursor of the at least one additional constitutional unit (ii) comprises at least one group selected from the group of carbonyl, sulfonate, and phosphate groups. Additionally, the carbonyl group may include an amide, an ester, or alkoxylate of the amide or ester. Typically, the at least one additional constitutional unit (ii) has a structure represented by formula (II), or an anhydride thereof: 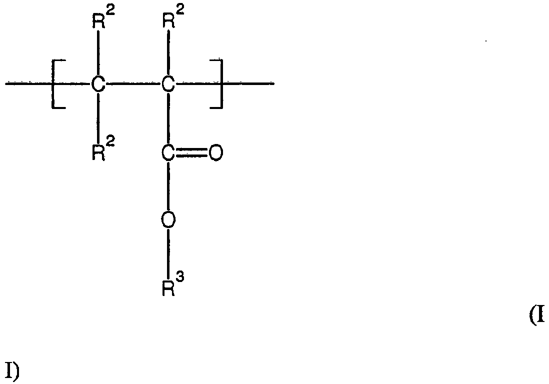 wherein R² is selected from the group of a hydrogen atom, an alkyl group, an aryl group, and a carbonyl group; and R³ is selected from the group of a hydrogen atom, an alkyl group, an aryl group, and a hydroxyalkyl group. For example, in one embodiment, R³ is a hydrogen atom and the precursor of the at least one additional constitutional unit (ii) can be acrylic acid. Alternatively, in another embodiment, R³ is a hydroxyalkyl group and the precursor of the at least one constitutional unit (ii) can be a hydroxyalkyl acrylate or methacrylate. The additional constitutional unit (ii) is typically further represented by at least one of the following formulas: 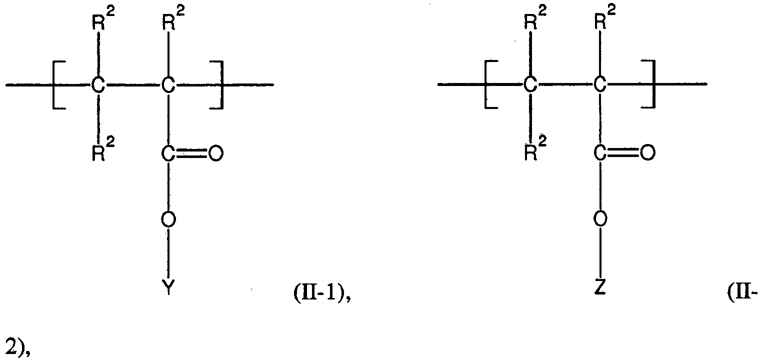 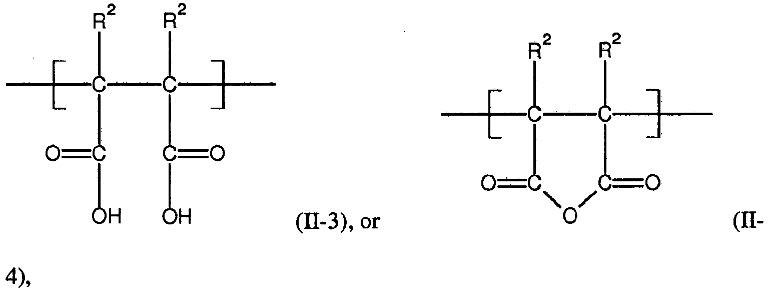 wherein R² is selected from the group of a hydrogen atom, an alkyl group, an aryl group, and a carbonyl group; Y is selected from the group of a hydrogen atom, an alkyl group, and an aryl group; and Z is a hydroxyalkyl group. In one embodiment, the at least one additional constitutional unit (ii) is further defined as at least two different additional constitutional units (ii) each having the formula (II), and the precursors of the at least two different additional constitutional units (ii) can be selected from any of the aforementioned compounds set forth above as being suitable for the precursor of the at least one additional constitutional unit (ii).

For the polymer comprising the at least one constitutional unit (i) and the at least two different additional constitutional units (ii), the at least two different additional constitutional units (ii) are typically present in a molar ratio of from about 1:10 to about 10:1.

Without being bound to any particular theory, it is believed that under some circumstances the polymer that comprises the at least two different additional constitutional units (ii), present in the above molar ratios, possesses enhanced solubility properties. Enhanced solubility of the polymer is beneficial because after the polymer wraps around molecules and/or small particles of silica and/or silicates of the aqueous component, the polymer possessing the captured silica and/or silicates may itself otherwise precipitate and deposit on the surfaces in the aqueous system if the polymer is not soluble enough to remain in solution in the aqueous component.

Typically, the polymer only comprises the at least one constitutional unit (i) and the at least one additional constitutional unit (ii) as described above. However, it is to be appreciated that the polymer is not limited to only comprising constitutional units (i) and (ii) and, under certain circumstances, the polymer can comprise optional constitutional units other than those described herein.

Typically, the polymer has a number average molecular weight of from about 25,000 to about 45,000 and, more typically, from about 30,000 to about 40,000 g/mol.

The polymer is present in the aqueous system in an amount sufficient to inhibit precipitation of silica and/or silicate compounds dissolved in the aqueous component. To these ends, the polymer may be added to the aqueous component in an amount of from about 0.5 to about 500, more typically from about 0.8 to about 350, and most typically from about 1 to about 100 ppm.

The presence of the polymer in the aqueous component within the amounts set forth above inhibits the silica and/or silicate compounds from precipitating and depositing on the surface in the aqueous system. Typically, at least about 50 percent, and more typically at least about 70 percent by weight, of the silica and/or silicates dissolved in the aqueous component prior to adding the polymer remain dissolved in the aqueous component at 40° Celsius, a pH of about 7.0, and 22 hours after the addition of the polymer to the aqueous system. It is believed that similar results can be obtained where the aqueous component has a more basic pH.

As alluded to above, the presence of the polymer in the aqueous component inhibits deposition of silica and/or silicate compounds on surfaces in the aqueous system. Further, the polymer exhibits stability and superior inhibition properties even in aqueous components having a basic pH. Both the stability and inhibition properties of the polymer, especially when the aqueous component has a basic pH, is comparable to and, in some circumstances, greatly improved as compared to other commercially available silica scale inhibitors.

In one embodiment, the polymer is added to the aqueous system alone for inhibiting the deposition of the silica and/or silicate compounds on the surface in the aqueous system. In another embodiment, the polymer is used in combination with one or more other monomers, oligomers, and/or polymers for inhibiting the deposition of the silica and/or silicate compounds on the surface in the aqueous system, and/or in combination with other water treating agents. Other monomers, oligomers, and/or polymers include, but are not limited to, acrylic acid polymers and copolymers and maleic acid and maleic anhydride polymers and copolymers. Other water treating agents include, but are not limited to, phosphoric acids and their salts, metal chelating agents, corrosion inhibitors, polymer scale control dispersants, microbiocides, flocculants, coagulants, oxygen scavengers, neutralizing amines, and scale inhibitors.

The embodiments of the present invention described above have been presented for the purposes of illustration and description. The embodiments are not intended to be exhaustive or limit the present invention. The embodiments were chosen and described in order to best explain the principle of the invention and its practical applications to enable others skilled in the art to best utilize the invention in its various embodiments and with various modifications as are suited to the particular use contemplated.

The following examples are meant to illustrate the invention and are not to be viewed in any way as limiting to the scope of the invention.

### EXAMPLES

Various silica scale inhibitors are formed from a plurality of precursors resulting in polymers having different constitutional units. Polymers 1-3 are silica scale inhibitors used in accordance with the method of the present invention. Chemical descriptions of the precursors used to form Polymers 1-3 are provided below.

At least one constitutional unit (i) is present in Polymers 1-3 in a molar percent of from about 15 to about 50 based upon the total amount of all constitutional units present in Polymers 1-3. Where the at least one constitutional unit (i) comprises at least two different constitutional units each represented by the formula (I), at least one of the constitutional units (i-1) and at least one of the other constitutional units (i-2) are present in a molar ratio of from about 1:5 to about 5:1. An alkoxylated vinyl ether is representative of a precursor of the at least one constitutional unit (i) in Polymers 1-3.

At least one additional constitutional unit (ii) is also present in Polymers 1-3. Where the at least one additional constitutional unit (ii) comprises at least two different additional constitutional units each represented by the formula (II), the at least two additional constitutional units are present in a molar ratio of from about 1:10 to about 10:1. Acrylic acid, maleic anhydride, and hydroxyalkyl acrylate are representative of precursors of the at least one additional constitutional unit (ii) in Polymers 1-3. All precursors of Polymers 1-3 are reacted in conditions optimal to minimize, if not completely avoid, side reactions.

Polymer 1 comprises the polymerization product of acrylic acid and an alkoxylated vinyl ether having a number average molecular weight of about 3,000 g/mol.

Polymer 2 comprises the polymerization product of acrylic acid, maleic anhydride, and an alkoxylated vinyl ether having a number average molecular weight of about 5,800 g/mol.

Polymer 3 is the polymerization product of maleic anhydride, a hydroxyalkyl acrylate, and two different alkoxylated vinyl ethers having a number average molecular weight of about 1,100 and 5,800 g/mol.

Comparative Polymers 1-10 are commercially available scale inhibitors comprising polymers not in accordance with the present invention. Comparative Examples 1-10 are included to provide a basis for comparison with performance properties of Polymers 1-3 as used in accordance with the method of the present invention.

Comparative Polymer 1 is a terpolymer of acrylic acid, methacyrlic acid, and a methyl polyethylene glycol ester of methacrylic acid having a number molecular weight of about 13,000 g/mol.

Comparative Polymer 2 is a polyacrylic acid with a number average molecular weight of about 4,000 g/mol.

Comparative Polymer 3 is an acrylic acid and maleic acid copolymer in a sodium salt form having a number average molecular weight of about 50,000 g/mol.

Comparative Polymer 4 is a mixture of poly(2-ethyloxazoline) and acrylic acid copolymer sold as a silica scale inhibitor and commercially available under the tradename CARBOSPERSE^{®} K-XP212 from The Lubrizol Corporation.

Comparative Polymer 5 is a terpolymer of acrylic acid, methacrylic acid, and a taurine-acrylic monomer.

Comparative Polymer 6 is a modified polyacrylic acid having a number average molecular weight of about 3,000 g/mol.

Comparative Polymer 7 is a terpolymer of acrylic acid, t-butyl acrylamide, and 2-acrylamido-2-methyl propane sulfonic acid having a number average molecular weight of about 5,000 g/mol sold as a silica scale inhibitor and commercially available under the tradename ACUMER^{®} 5000 from Dow Chemical Company.

Comparative Polymer 8 is a modified polyacrylic acid having a number average molecular weight of about 20,000 g/mol.

Comparative Polymer 9 is a copolymer of maleic acid in a sodium salt form and isobutene having a number average molecular weight of about 4,000 g/mol.

Comparative Polymer 10 is a polyacrylic acid, likely modified by a maleic anhydride comonomer, sold as a silica scale inhibitor and commercially available under the tradename Versaflex^{®} Si from Akzo Nobel.

Polymers 1-3 and Comparative Polymers 1-10 are evaluated to determine performance properties including inhibition of precipitation of silica and/or silicate compounds from an aqueous component that includes water, dissolved silica (sodium silicate), calcium ions (Ca²⁺), magnesium ions (Mg²⁺), and chloride ions (Cl⁻) at a pH of 7.0 and at 40° Celsius. An ability of the polymer to inhibit precipitation of the silica and/or silicate compounds from the aqueous component is measured through an inhibition test to determine an amount of the dissolved silica and/or silicates remaining in the aqueous component. To perform the test, three aqueous stock solutions are prepared: a 0.2 M Na₂SiO₃ solution, a 0.2 M CaCl₂ and 0.2 M MgCl₂ solution, and a polymer solution comprising about 1,000 ppm of the polymer in water.

A 200.0 mL test aqueous component is prepared containing 5.0 mL of the polymer solution, 8.6 mL of the 0.2 M Na₂SiO₃ solution, and 5.0 mL of the 0.2 M CaCl₂/ 0.2 M MgCl₂ solution, with the volume adjusted to 200.0 mL with distilled water. The test aqueous component is adjusted to a pH of 7.0 which is maintained throughout the test. The test aqueous component contains the following concentrations: 450-640 ppm of dissolved silica present as SiO₂, 200 ppm of Ca²⁺, 120 ppm of Mg²⁺, and 25 ppm of the polymer. The test aqueous component is placed in a beaker containing a 2-hole rubber stopper. One opening is used for a pH probe and the second for sampling. The test aqueous component is stirred while heating at 40° Celsius in a circulating bath. A 3.0 to 5.0 mL sample is periodically removed and passed through a filter. A 2.0 mL sample of the filtrate is taken and diluted to 25.0 mL with distilled water. The contents of one Molybdate Reagent Pillow for highrange silica (available from Hach Co., Loveland, Colorado) is added to 10.0 mL of the diluted sample and the diluted sample is mixed to dissolve the molybdate reagent. The contents of one Acid Reagent Pillow (available from Hach Co., Loveland, Colorado) are then added to the diluted sample and the diluted sample is mixed to dissolve the acid reagent. The diluted sample is allowed to stand for 10 minutes. The contents of one Citric Acid Pillow (available from Hach Co., Loveland, Colorado) are then added to the diluted sample and the diluted sample is mixed to dissolve the citric acid. The diluted sample is allowed to stand for 2 minutes before determining the concentration of dissolved silica and/or silicates in the diluted sample. The molybdate reagent reacts with any silicic acid/silicate and quantitatively forms a yellow compound. Color intensity of the yellow compound is proportional to an amount of dissolved silica and/or silicates present in the test aqueous component. Color intensity is determined by measuring absorbance of the yellow compound with a spectrophotometer at 450 nm.

Absorbance is obtained for the test aqueous component immediately following its preparation and 22 hours after preparation. The amount of dissolved silica and/or silicates present 22 hours after preparation represents a stabilized silica concentration. Generally, higher stabilized silica concentrations are an indicator of higher effectiveness of the polymer as an inhibitor of deposition of silica and/or silicate compounds.

Since the concentration of the polymers utilized throughout the inhibition test remains constant, regardless of the concentration of the dissolved silica and/or silicates, the amount of dissolved silica and/or silicates present 22 hours after preparation accurately indicates the effectiveness of the polymer as an inhibitor of deposition of silica and/or silicate compounds. Without being limited to any particular theory, it is believed that when finite or set amounts of the polymer are present in the aqueous component along with the dissolved silica and/or silicates, the polymer binds up the dissolved silica and/or silicates. When excessive amounts of dissolved silica and/or silicates are present in the aqueous component, the polymer may be overwhelmed to a point where the polymer is completely or substantially bound with silica and/or silicates, i.e., "used up". At this point, any remaining dissolved silica and/or silicates are free to react with cations or like dissolved silica and/or silicates, thus eventually leading to precipitation and deposition of silica and/or silicate compounds.

Polymers 1-3 and Comparative Polymers 1-10 are evaluated utilizing the inhibition test described above. The results of the evaluations are set forth in Table 1 below.

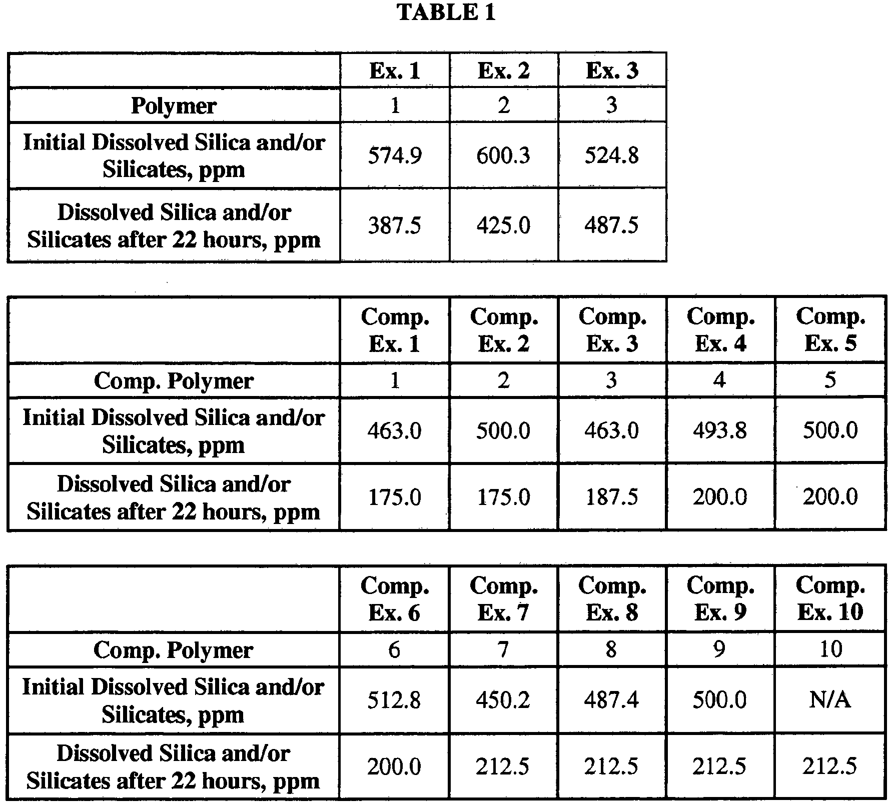

As can be seen from the data presented in Tables, Examples 1-3 indicate excellent stabilized silica concentrations are obtained when Polymers 1-3 are used, in contrast to Comparative Examples 1-10. Referring to the chart of Figure 1, the excellent results of Examples 1-3 are visually shown relative to the Comparative Examples 1-10. Accordingly, Examples 1-3 exhibit superior performance compared to the performance of Comparative Examples 1-10. Example 3 outperforms all Examples and Comparative Examples tested. This performance is thought to result, in part from the polymer and structures thereof.

The present invention has been described in an illustrative manner, and it is to be understood that the terminology which has been used is intended to be in the nature of words of description rather than of limitation. Obviously, many modifications and variations of the present invention are possible in light of the above teachings. It is, therefore, to be understood that within the scope of the appended claims, the present invention may be practiced otherwise than as specifically described.

## Claims

1. A method of inhibiting the deposition of silica and/or silicate compounds on a surface in an aqueous system, said method comprising the step of adding a polymer to the aqueous system, the polymer comprising:
(i) at least one constitutional unit represented by the formula: 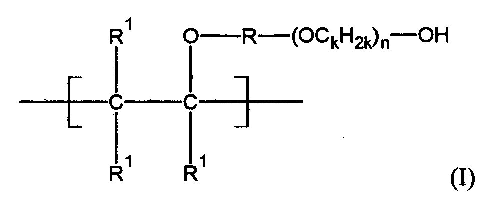 wherein R is an alkyl group having at least 2 carbon atoms; R¹ is selected from the group of a hydrogen atom, an alkyl group, an aryl group, an ester, an amide, and an imide; k is 2 to 4; n is at least about 10; and
(ii) at least one additional constitutional unit containing at least one group selected from the group of carbonyl groups, sulfonate groups, and phosphate groups.

2. A method of inhibiting the deposition of silica and/or silicate compounds on a surface in an aqueous system, said method comprising the steps of:
providing water in the aqueous system;
circulating the water in the aqueous system; and
introducing a polymer to the water, the polymer comprising:
(i) at least one constitutional unit represented by the formula: 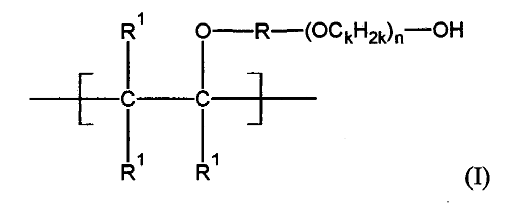 wherein R is an alkyl group having at least 2 carbon atoms; R¹ is selected from the group of a hydrogen atom, an alkyl group, an aryl group, an ester, an amide, and an imide; k is 2 to 4; n is at least about 10; and
(ii) at least one additional constitutional unit containing at least one group selected from the group of carbonyl groups, sulfonate groups, and phosphate groups.

3. A method as set forth in any of claims 1 or 2 wherein the aqueous system includes a reverse osmosis apparatus.

4. A method as set forth in any of claims 1 to 3 wherein n is at least 60 in at least one of the constitutional units (i).

5. A method as set forth in claim 4 wherein n is at least 125 in at least one of the constitutional units (i).

6. A method as set forth in any of claims 1 to 5 wherein the at least one constitutional unit (i) is further defined as at least two different constitutional units each represented by the formula (I) wherein n is greater than about 20 in at least one of the constitutional units (i-1) represented by formula (I) and wherein n is greater than about 60 in at least one of the other constitutional units (i-2) represented by formula (I).

7. A method as set forth in claim 6 wherein the constitutional units (i-1) and (i-2) are present in a molar ratio of from about 1:5 to about 5:1.

8. A method as set forth in any of claims 1 to 7 wherein the additional constitutional unit (ii) is further represented by formula (II) or an anhydride thereof: 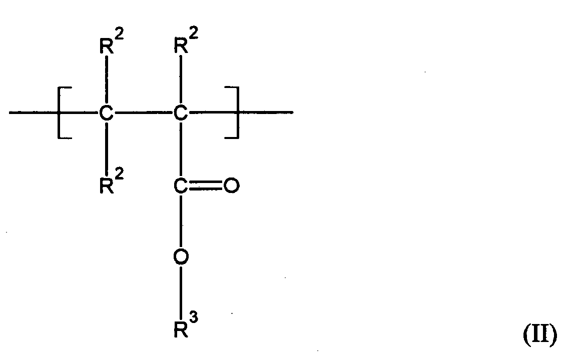 wherein R² is selected from the group of a hydrogen atom, an alkyl group, an aryl group, and a carbonyl group; and R³ is selected from the group of a hydrogen atom, an alkyl group, an aryl group, and a hydroxyalkyl group.

9. A method as set forth in claim 8 wherein the additional constitutional unit (ii) is further represented by at least one of the following formulas: 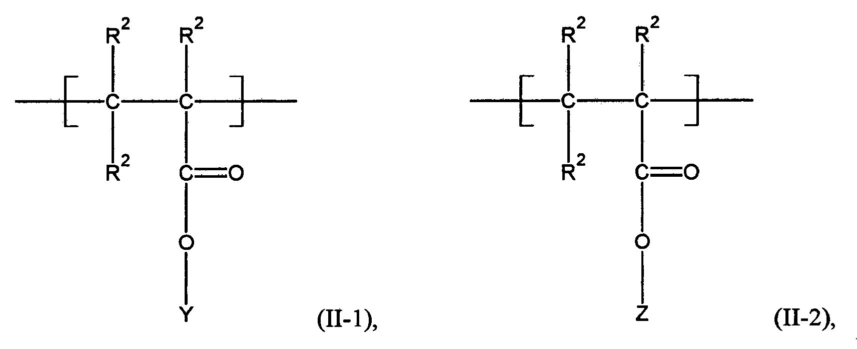 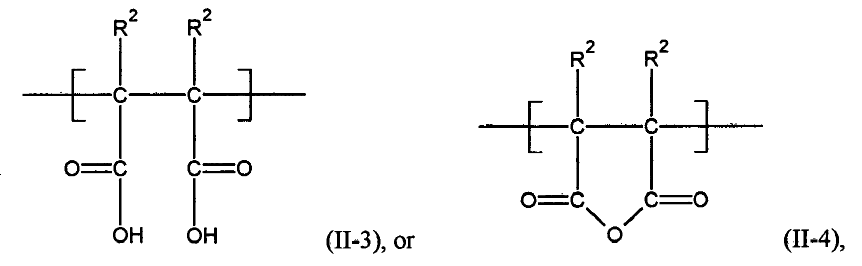 wherein R² is selected from the group of a hydrogen atom, an alkyl group, an aryl group, and a carbonyl group; Y is selected from the group of a hydrogen atom, an alkyl group, and an aryl group; Z is a hydroxyalkyl group.

10. A method as set forth in claim 9 wherein the at least one additional constitutional unit (ii) is further defined as at least two different additional constitutional units selected from the group represented by the formulas (II-1) through (II-4).

11. A method as set forth in claim 10 wherein the at least two different additional constitutional units are present in a molar ratio of from about 1:10 to about 10:1.

12. A method as set forth in any of claims 1 to 11 wherein the aqueous system includes an aqueous component comprising silica and/or silicates dissolved therein.

13. A method as set forth in claim 12 wherein the polymer is added to the aqueous component in an amount of from about 0.5 to about 500 ppm.

14. A method as set forth in any of claims 12 or 13 wherein at least about 50% of the silica and/or silicates dissolved in the aqueous component prior to adding the polymer remain dissolved in the aqueous component 22 hours after the addition of the polymer.

15. A method of inhibiting the deposition of silica and/or silicate compounds on a surface in an aqueous system, said method comprising the step of adding a polymer to the aqueous system, the polymer comprising the reaction product of:
(i) an alkoxylated vinyl ether having at least 10 alkyleneoxy groups present in a polyether chain thereof; and
(ii) an unsaturated compound containing at least one group selected from the group of carbonyl groups, sulfonate groups, and phosphate groups.

## Patentansprüche

1. Verfahren zur Hemmung der Ablagerung von Siliciumdioxid und/oder Silikatverbindungen auf einer Oberfläche in einem wässrigen System, wobei das Verfahren den Schritt des Zusetzens eines Polymers zu dem wässrigen System umfasst, wobei das Polymer Folgendes umfasst:
(i) mindestens eine Struktureinheit, die durch die folgende Formel dargestellt wird: 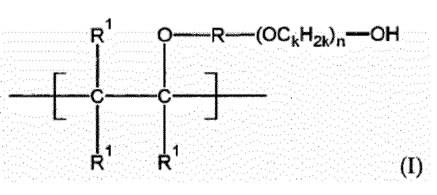 wobei R eine Alkylgruppe mit mindestens 2 Kohlenstoffatomen ist; R¹ aus der Gruppe von einem Wasserstoffatom, einer Alkylgruppe, einer Arylgruppe, einem Ester, einem Amid und einem Imid ausgewählt ist; k 2 bis 4 ist; n mindestens etwa 10 ist; und
(ii) mindestens einer zusätzlichen Struktureinheit, die mindestens eine Gruppe umfasst, die aus der Gruppe von Carbonylgruppen, Sulfonatgruppen und Phosphatgruppen ausgewählt ist.

2. Verfahren zur Hemmung der Ablagerung von Siliciumdioxid und/oder Silikatverbindungen auf einer Oberfläche in einem wässrigen System, wobei das Verfahren die folgenden Schritte umfasst:
Bereitstellen von Wasser in dem wässrigen System;
Umwälzen des Wassers in dem wässrigen System; und
Einbringen eines Polymers in das Wasser, wobei das Polymer Folgendes umfasst:
(i) mindestens eine Struktureinheit, die durch die folgende Formel dargestellt wird: 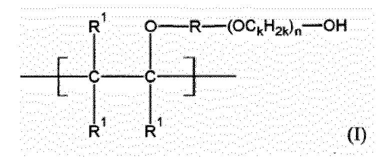 wobei R eine Alkylgruppe mit mindestens 2 Kohlenstoffatomen ist; R¹ aus der Gruppe von einem Wasserstoffatom, einer Alkylgruppe, einer Arylgruppe, einem Ester, einem Amid und einem Imid ausgewählt ist; k 2 bis 4 ist; n mindestens etwa 10 ist; und
(ii) mindestens einer zusätzlichen Struktureinheit, die mindestens eine Gruppe umfasst, die aus der Gruppe von Carbonylgruppen, Sulfonatgruppen und Phosphatgruppen ausgewählt ist.

3. Verfahren nach einem der Ansprüche 1 oder 2, wobei das wässrige System eine Umkehrosmose-Vorrichtung enthält.

4. Verfahren nach einem der Ansprüche 1 bis 3, wobei in mindestens einer der Struktureinheiten (i) n mindestens 60 ist.

5. Verfahren nach Anspruch 4, wobei in mindestens einer der Struktureinheiten (i) n mindestens 125 ist.

6. Verfahren nach einem der Ansprüche 1 bis 5, wobei die mindestens eine Struktureinheit (i) ferner als mindestens zwei verschiedene Struktureinheiten definiert ist, die jeweils durch die Formel (I) dargestellt werden, wobei in mindestens einer der Struktureinheiten (i-1), die durch die Formel (I) dargestellt werden, n größer als etwa 20 ist, und wobei in mindestens einer der Struktureinheiten (i-2), die durch die Formel (I) dargestellt werden, n größer als etwa 60 ist.

7. Verfahren nach Anspruch 6, wobei die Struktureinheiten (i-1) und (i-2) in einem Molverhältnis von etwa 1:5 bis etwa 5:1 vorhanden sind.

8. Verfahren nach einem der Ansprüche 1 bis 7, wobei die zusätzliche Struktureinheit (ii) ferner durch Formel (II) oder ein Anhydrid davon dargestellt wird: 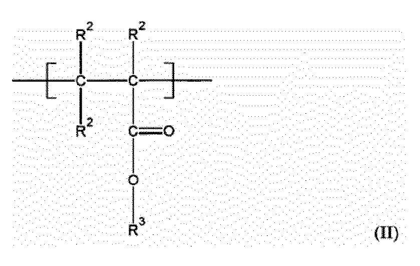 wobei R² aus der Gruppe von einem Wasserstoffatom, einer Alkylgruppe, einer Arylgruppe und einer Carbonylgruppe ausgewählt ist; und R³ aus der Gruppe von einem Wasserstoffatom, einer Alkylgruppe, einer Arylgruppe und einer Hydroxyalkylgruppe ausgewählt ist.

9. Verfahren nach Anspruch 8, wobei die zusätzliche Struktureinheit (ii) ferner durch mindestens eine der folgenden Formeln dargestellt wird: 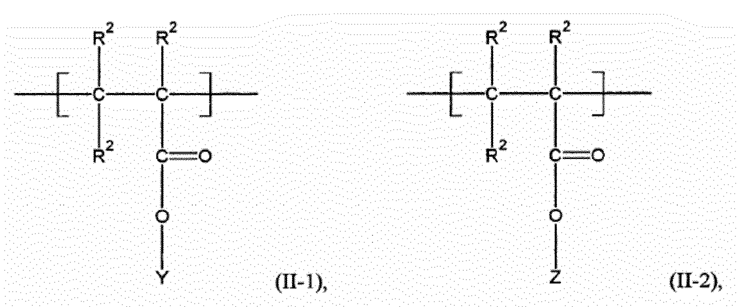 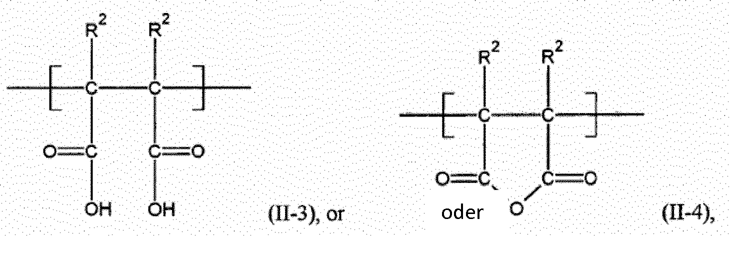 wobei R² aus der Gruppe von einem Wasserstoffatom, einer Alkylgruppe, einer Arylgruppe und einer Carbonylgruppe ausgewählt ist; Y aus der Gruppe von einem Wasserstoffatom, einer Alkylgruppe und einer Arylgruppe ausgewählt ist; Z eine Hydroxyalkylgruppe ist.

10. Verfahren nach Anspruch 9, wobei die mindestens eine zusätzliche Struktureinheit (ii) ferner als mindestens zwei verschiedene zusätzliche Struktureinheiten ausgewählt aus der Gruppe, die durch die Formeln (II-1) bis (II-4) dargestellt werden, definiert ist.

11. Verfahren nach Anspruch 10, wobei die mindestens zwei verschiedenen zusätzlichen Struktureinheiten in einem molaren Verhältnis von etwa 1:10 bis etwa 10:1 vorhanden sind.

12. Verfahren nach einem der Ansprüche 1 bis 11, wobei das wässrige System eine wässrige Komponente enthält, die darin gelöstes Siliciumdioxid und/oder darin gelöste Silikate umfasst.

13. Verfahren nach Anspruch 12, wobei das Polymer der wässrigen Komponente in einer Menge von etwa 0,5 bis etwa 500 ppm zugesetzt wird.

14. Verfahren nach einem der Ansprüche 12 oder 13, wobei mindestens etwa 50 % des Siliciumdioxids und/oder der Silikate, die vor Zusatz des Polymers in der wässrigen Komponente gelöst sind, in der wässrigen Komponente 22 Stunden nach dem Zusatz des Polymers gelöst bleiben.

15. Verfahren zur Hemmung der Ablagerung von Siliciumdioxid und/oder Silikatverbindungen auf einer Oberfläche in einem wässrigen System, wobei das Verfahren den Schritt des Zusetzens eines Polymers zu dem wässrigen System umfasst, wobei das Polymer das Reaktionsprodukt von Folgenden umfasst:
(i) einem alkoxylierten Vinylether mit mindestens 10 Alkylenoxygruppen, die in einer Polyetherkette davon vorhanden sind; und
(ii) einer ungesättigten Verbindung mit mindestens einer Gruppe, die aus der Gruppe von Carbonylgruppen, Sulfonatgruppen und Phosphatgruppen ausgewählt ist.

## Revendications

1. Procédé d'inhibition du dépôt de silice et/ou de composés de silicate sur une surface dans un système aqueux, ledit procédé comprenant l'étape d'ajout d'un polymère au système aqueux, le polymère comprenant :
(i) au moins une unité constitutionnelle représentée par la formule : 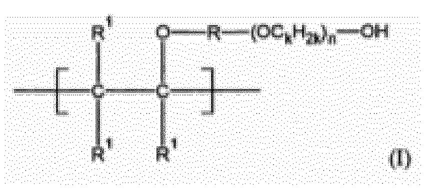 dans laquelle R est un groupe alkyle ayant au moins 2 atomes de carbone, R¹ est choisi dans le groupe d'un atome d'hydrogène, d'un groupe alkyle, d'un groupe aryle, d'un ester, d'un amide et d'un imide ; k vaut de 2 à 4 ; n vaut au moins environ 10 ; et
(ii) au moins une unité constitutionnelle supplémentaire contenant au moins un groupe choisi dans le groupe des groupes carbonyle, des groupes sulfonate et des groupes phosphate.

2. Procédé d'inhibition du dépôt de silice et/ou de composés de silicate sur une surface dans un système aqueux, ledit procédé comprenant les étapes de :
fourniture d'eau dans le système aqueux ;
circulation de l'eau dans le système aqueux ; et
introduction d'un polymère dans l'eau, le polymère comprenant :
(i) au moins une unité constitutionnelle représentée par la formule : 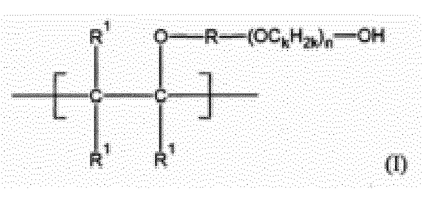 dans laquelle R est un groupe alkyle ayant au moins deux atomes de carbone ; R¹ est choisi dans le groupe d'un atome d'hydrogène, d'un groupe alkyle, d'un groupe aryle, d'un ester d'un amide et d'un imide ; k vaut de 2 à 4 ; n vaut au moins environ 10 ; et
(ii) au moins une unité constitutionnelle supplémentaire contenant au moins un groupe choisi dans le groupe des groupes carbonyle, des groupes sulfonate et des groupes phosphate.

3. Procédé tel que présenté dans l'une quelconque des revendications 1 ou 2 dans lequel le système aqueux comprend un appareil à osmose inverse.

4. Procédé tel que présenté dans l'une quelconque des revendications 1 à 3 dans lequel n vaut au moins 60 dans au moins une des unités constitutionnelles (i).

5. Procédé tel que présenté dans la revendication 4 dans lequel n vaut au moins 125 dans au moins une des unités constitutionnelles (i).

6. Procédé tel que présenté dans l'une quelconque des revendications 1 à 5 dans lequel la au moins une unité constitutionnelle (i) est en outre définie comme au moins deux unités constitutionnelles différentes chacune représentée par la formule (I) dans laquelle n est supérieur à environ 20 dans au moins une des unités constitutionnelles (i-1) représentée par la formule (I) et dans lequel n est supérieur à environ 60 dans au moins une des autres unités constitutionnelles (i-2) représentée par la formule (I).

7. Procédé tel que présenté dans la revendication 6 dans lequel les unités constitutionnelles (i-1) et (i-2) sont présentes dans un rapport molaire d'environ 1 : 5 à environ 5:1.

8. Procédé tel que présenté dans les revendications 1 à 7 dans lequel l'unité constitutionnelle supplémentaire (ii) est en outre représentée par la formule (II) ou un anhydride associé : 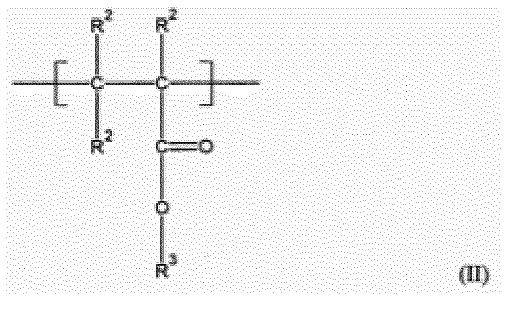 dans laquelle R² est choisi dans le groupe d'un atome d'hydrogène, d'un groupe alkyle, d'un groupe aryle et d'un groupe carbonyle ; et R³ est choisi dans le groupe d'un atome d'hydrogène, d'un groupe alkyle, d'un groupe aryle et d'un groupe hydroxyalkyle.

9. Procédé tel que présenté dans la revendication 8 dans lequel l'unité constitutionnelle (ii) supplémentaire est en outre représentée par au moins une des formules suivantes : 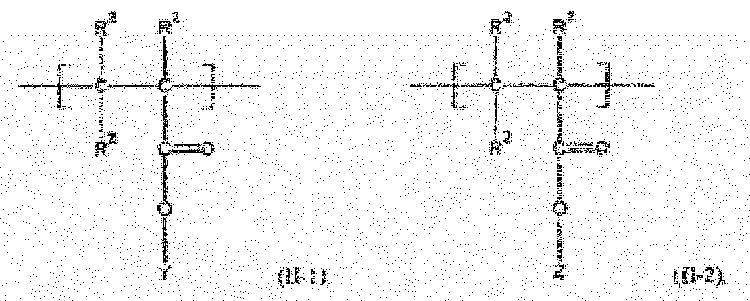 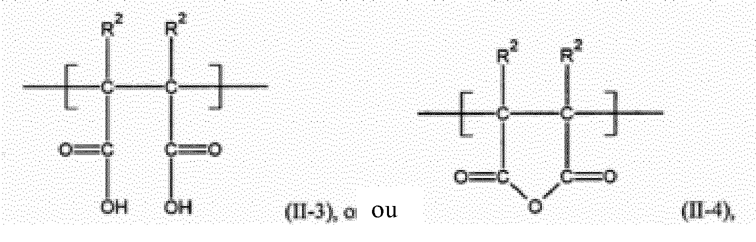 dans lesquelles R² est choisi dans le groupe d'un atome d'hydrogène, d'un groupe alkyle, d'un groupe aryle et d'un groupe carbonyle ; Y est choisi dans le groupe d'un atome d'hydrogène, d'un groupe alkyle et d'un groupe aryle ; Z est un groupe hydroxyalkyle.

10. Procédé tel que présenté dans la revendication 9 dans lequel la au moins une unité constitutionnelle (ii) supplémentaire est en outre définie comme les au moins deux unités constitutionnelles supplémentaires différentes choisies dans le groupe représenté par les formules (II-1) à (II-4).

11. Procédé tel que présenté dans la revendication 10 dans lequel les au moins deux unités constitutionnelles supplémentaires différentes sont présentes dans un rapport molaire d'environ 1 : 10 à environ 10 : 1.

12. Procédé tel que présenté dans les revendications 1 à 11 dans lequel le système aqueux comprend un composant aqueux comprenant de la silice et/ou des silicates dissous à l'intérieur.

13. Procédé tel que présenté dans la revendication 12 dans lequel le polymère est ajouté au composant aqueux en une quantité d'environ 0,5 à environ 500 ppm.

14. Procédé tel que présenté dans l'une quelconque des revendications 12 ou 13 dans lequel au moins environ 50 % de la silice et/ou des silicates dissous dans le composant aqueux avant l'ajout du polymère restent dissous dans le composant aqueux 22 heures après l'ajout du polymère.

15. Procédé d'inhibition du dépôt de silice et/ou de composés de silicate sur une surface dans un système aqueux, ledit procédé comprenant l'étape d'ajout d'un polymère au système aqueux, le polymère comprenant le produit de réaction de :
(i) un éther vinylique alcoxylé ayant au moins 10 groupe alcylènoxy présents dans une chaîne de polyéther associée ; et
(ii) un composé insaturé contenant au moins un groupe choisi dans le groupe des groupes carbonyle, des groupes sulfonate et des groupes phosphate.
